# EUROPÄISCHE PATENTSCHRIFT

(11) **EP 4 266 082 B1**
(45) Veröffentlichungstag und Bekanntmachung des Hinweises auf die Patenterteilung: **23.10.2024**
(21) Anmeldenummer: 22168796.5
(22) Anmeldetag: 19.04.2022
(51) Int. Cl.: G01S 7/521, G01S 7/523, G01S 15/88, B06B 1/02, G01S 7/524

(54) **ANSTEUERSCHALTUNG FÜR EINEN PIEZOELEKTRISCHEN ULTRASCHALLWANDLER SOWIE ULTRASCHALLWANDLERSYSTEM**
CONTROL CIRCUIT FOR A PIEZOELECTRIC ULTRASONIC TRANSDUCER AND ULTRASONIC TRANSDUCER SYSTEM
CIRCUIT DE COMMANDE POUR UN TRANSDUCTEUR À ULTRASONS PIÉZOÉLECTRIQUE, AINSI QUE SYSTÈME DE TRANSDUCTEUR À ULTRASONS

(43) Veröffentlichungstag der Anmeldung: 25.10.2023
(73) Patentinhaber: Pepperl+Fuchs SE, 68307 Mannheim (DE)
(72) Erfinder: Rode, Mark, 68623 Lampertheim (DE)
(74) Vertreter: Banse & Steglich Patentanwälte PartmbB

(56) Entgegenhaltungen:
- EP-B1- 2 189 808
- DE-A1- 102006 054 095
- DE-A1- 3 618 222
- US-A1- 2021 220 871

## Beschreibung

### Technisches Gebiet

Die Erfindung betrifft Ansteuerschaltungen für piezoelektrische Ultraschallwandler mit verbessertem Schutz gegenüber Überspannungen aufgrund von Schaltvorgängen an Transformatorinduktivitäten.

### Technischer Hintergrund

Ultraschallwandler werden zur Objekterkennung eingesetzt und weisen in der Regel einen Piezoaktor auf, der zur Anregung eine hohe elektrische Wechselspannung von etwa 100 bis 200 V benötigt. Das Spannungsniveau einer solchen Ansteuerspannung wird in der Regel durch Spannungstransformation mithilfe eines Transformators in der Endstufe bereitgestellt.

Im Sendebetrieb wird eine periodische gepulste Betriebsspannung primärseitig an den Transformator angelegt, die entsprechend auf die gewünschte Ansteuerspannung hochtransformiert wird. Die Anregung erfolgt aus Gründen des einfacheren Schaltungsaufbaus pulsförmig. Zur pulsförmigen Anregung eines solchen Transformators wird eine bereitgestellte Betriebsspannung primärseitig aufgeschaltet bzw. abgeschaltet. Durch die pulsförmige Ansteuerung des Transformators ergibt sich aufgrund der in der Induktivität der primärseitigen Transformatorwicklung gespeicherten elektrischen Energie eine relativ hohe Abschaltspannung. Dieser Effekt wird auch als Flyback-Effekt bezeichnet.

Die durch den Flyback-Effekt resultierende hohe Abschaltspannung an der Primärseite des Transformators muss begrenzt werden, um Schädigungen an Bauteilen der Ansteuerschaltung zu vermeiden. In der Regel wird die Energie der primärseitigen Induktivität über Dioden abgeleitet und als Verlustleistung in Form von Wärme abgeführt. Ultraschallwandlersysteme steuern den Ultraschallwandler in der Regel wechselweise in einem Sendebetrieb zum Aussenden eines Ultraschallsendesignals und einem Empfangsbetrieb zum Empfangen eines Ultraschallempfangssignals, das einem an einem oder mehreren Umgebungsobjekten reflektierten Ultraschallsendesignal entspricht, an. Sich ergebende Ultraschallsignallaufzeiten nebst anderen Merkmalen werden ausgewertet, um Informationen über sich im Erfassungsbereich des Ultraschallwandlersystems befindliche Umgebungsobjekte zu erhalten. Beim Umschalten vom Sendebetrieb in den Empfangsbetrieb ist es notwendig, die auf der Primärseite gespeicherte Energie schnellstmöglich vollständig abzuleiten, um so die Empfindlichkeit zu Beginn des Empfangsbetriebs möglichst schnell nach dem Ende des Sendebetriebs bereitzustellen. Das Herstellen der Detektionsfähigkeit nach dem Ende der Sendephase entscheidet maßgeblich darüber, bis zu welcher Entfernung im Nahbereich Umgebungsobjekte durch das Ultraschallwandlersystem detektiert werden können.

DE 3 618 222 A1 offenbart eine Sende/Empfangsschaltung für einen Ultraschallwandler, bei der der Anregungsimpuls für den Ultraschallwandler auf einfache Weise erzeugt werden kann und die Empfangsschaltung gegen Zerstörung durch den Anregungsimpuls geschützt ist. Es ist Aufgabe der vorliegenden Erfindung, eine Ansteuerschaltung für einen Ultraschallwandler und ein Ultraschallwandlersystem zur Verfügung zu stellen, die effizienter ist und eine verbesserte Leistungsfähigkeit für das Erkennen von Umgebungsobjekten im Nahbereich ermöglicht.

### Offenbarung der Erfindung

Diese Aufgabe wird durch die Ansteuerschaltung für einen Ultraschallwandler gemäß Anspruch 1 sowie durch das Ultraschallwandlersystem gemäß dem nebengeordneten Anspruch gelöst.

Weitere Ausgestaltungen sind in den abhängigen Ansprüchen angegeben.

Gemäß einem ersten Aspekt ist eine Ansteuerschaltung für einen piezoelektrischen Ultraschallwandler in einem Ultraschallwandlersystem vorgesehen, umfassend:
- einen Transformator mit mindestens einer primärseitigen Wicklung;
- eine Schalteinheit mit einem Halbleiterschalter, die mit der mindestens einen primärseitigen Wicklung über einen geschalteten Anschluss verbunden ist,
- eine Steuereinheit, die ausgebildet ist, um eine Betriebsspannung alternierend an die mindestens eine primärseitige Wicklung anzulegen oder davon zu trennen,
- eine Schutzschaltung, die mit dem geschalteten Anschluss elektrisch gekoppelt ist und eine Zenerdiode aufweist, die eine Abschaltspannung am geschalteten Anschluss betragsmäßig auf eine Begrenzungsspannung begrenzt, die mindestens der doppelten Betriebsspannung entspricht.

Es kann vorgesehen sein, dass die Begrenzungsspannung aus einem Bereich zwischen 100 und 150 % des Betrags der doppelten Betriebsspannung, insbesondere zwischen 105 und 130 % des Betrags der doppelten Betriebsspannung gewählt ist.

Weiterhin kann die Begrenzungsspannung durch Wahl einer Einsatzspannung oder Durchbruchsspannung der Zenerdiode bestimmt sein.

Vorzugsweise kann die Schutzschaltung elektrisch nicht kapazitiv mit dem mindestens einen geschalteten Anschluss gekoppelt sein.

In einer Ansteuerschaltung für einen Ultraschallwandler ist für einen Sendebetrieb ein Transformator vorgesehen, um den insbesondere als Piezoaktor ausgebildeten Ultraschallwandler mit entsprechend hohen Ansteuerspannungen ansteuern zu können. Die Ansteuerung erfolgt mit einer Wechselspannung, die in der Regel durch eine primärseitig dem Transformator bereitgestellte gepulste Betriebsspannung bereitgestellt wird. Die gepulste Betriebsspannung wird durch Anlegen oder Abschalten einer Betriebsspannung, insbesondere mithilfe geeigneter Halbleiterschalter, wie z. B. Feldeffekttransistoren oder dergleichen, erzeugt.

Aufgrund der Induktivität der mindestens einen primärseitigen Wicklung des Transformators entsteht beim Abschalten der Betriebsspannung aufgrund der in der Induktivität gespeicherten elektrischen Energie eine erhebliche Spannungserhöhung an dem geschalteten Transformatoranschluss. Die Spannungserhöhung kann zur Schädigung oder Zerstörung von Bauteilen des Ultraschallwandlersystems führen. Daher wird in der Regel eine geeignete Schutzschaltung vorgesehen, die den Spannungsanstieg nach dem Abschalten der primärseitigen Wicklung begrenzt.

Unmittelbar nach dem Abschalten der primärseitigen Wicklung des Transformators liegt an dem geschalteten Transformatoranschluss in der Regel die doppelte Betriebsspannung an, da das Potential des entsprechenden anderen Transformatoranschlusses der primärseitigen Wicklung nicht geschaltet wird und dadurch konstant gehalten wird. Ohne weitere Maßnahmen würde nun aufgrund der in der Wicklung gespeicherten elektrischen Energie die Abschaltspannung über die primärseitige Wicklung weiter ansteigen, wenn ein Stromfluss aus der primärseitigen Wicklung stark begrenzt oder gar unterbunden wird.

Gemäß obiger Ansteuerschaltung wird daher die Schutzschaltung an den geschalteten Anschluss der mindestens einen primärseitigen Wicklung gekoppelt und weist eine Zenerdiode auf. Die Einsatzspannung (Durchbruchsspannung) der Zenerdiode ist minimal oberhalb der doppelten Betriebsspannung, mit der die primärseitige Wicklung geschaltet wird, vorgesehen. Durch das Festlegen der Einsatzspannung der Zenerdiode auf einen Wert oberhalb der doppelten Betriebsspannung wird ein Anstieg der Abschaltspannung über der primärseitigen Wicklung über eine durch die Einsatzspannung definierte Spannungsschwelle hinaus effizient unterbunden. Auf diese Weise ist es möglich, dass erstens die Spannung über der primärseitigen Wicklung zum Schutz der anderen Bauteile begrenzt wird und zweitens diese Spannung gerade so gewählt wird, dass sie im Zusammenspiel mit den umliegenden Bauteilen für einen optimalen Energieabfluss sorgt.

Durch das gezielte Abfließen des Stromes in der Abschaltphase über die Schutzschaltung verbleibt beim Übergang vom Sendebetrieb zu einem Empfangsbetrieb weniger elektrische Energie im Transformator, so dass der Ausschwingvorgang am Ende des Sendebetriebs deutlich verkürzt wird. Ein etwaiges durch den Ultraschallwandler empfangenes Ultraschallempfangssignal kann somit in verbesserter Weise detektiert werden, da das Ultraschallempfangssignal nicht oder nur für eine kürzere Zeitdauer durch ein etwaiges Ausschwingsignal nach dem Ende des Sendebetriebs überlagert wird.

Es kann vorgesehen sein, dass die Betriebsspannung durch eine Pufferkapazität gepuffert ist, wobei die Schutzschaltung über einen Ableitwiderstand mit der Pufferkapazität gekoppelt ist. Auf diese Weise kann ein Ladungsreservoir für einen zu Beginn des Einschaltvorgangs der primärseitigen Wicklung erforderlichen hohen Einschaltstrom bereitgestellt werden. Diese Rückführung der beim Abschalten abgeführten Energie in den Versorgungskreis ermöglicht es, den Strombedarf der Ansteuerschaltung zu reduzieren.

Weiterhin kann die Schutzschaltung mit dem mindestens einen geschalteten Anschluss über eine Diode, insbesondere direkt über eine Diode, gekoppelt sein, die bei Auftreten einer Spannungsdifferenz zwischen dem mindestens einen geschalteten Anschluss und der Zenerdiode einen Ladungsfluss von bzw. zu dem mindestens einen geschalteten Anschluss zur Begrenzung einer Spannungsänderung an dem mindestens einen geschalteten Anschluss bewirkt.

Somit kann die Schutzschaltung durch eine serielle Verschaltung mit einer Diode entkoppelt werden, so dass der Kapazitätseintrag der Schutzschaltung auf den geschalteten Transformatoranschluss bzw. auf die primärseitige Wicklung des Transformators verringert wird. Zudem ermöglicht es die in Serie geschaltete Diode, dass die Zenerdiode vorgespannt werden kann, so dass deren Schaltträgheit minimiert wird.

Es kann weiterhin vorgesehen sein, dass elektrisch parallel zur Zenerdiode eine Speicherkapazität geschaltet ist, die die Kapazität der Zenerdiode ergänzt. Dies ermöglicht ein verbessertes Zwischenspeichern der nach dem Abschalten der primärseitigen Wicklung abgeführten elektrischen Energie, die für den nächsten Schaltzyklus, d. h. beim nächsten Einschalten der primärseitigen Wicklung, verwendet werden kann. Dadurch, dass die Einsatzspannung der Zenerdiode gezielt höher als das Doppelte der Betriebsspannung gewählt wird, kann bei Anstieg der Abschaltspannung der resultierende Stromfluss durch die primärseitige Wicklung in die Speicherkapazität abfließen. Dies erfolgt solange, bis die Durchbruchsspannung der Zenerdiode erreicht ist. Der Stromfluss setzt sich dann in diese fort, bis deren Durchbruchspannung wieder unterschritten wird. Gleichzeitig ergibt der verlängerte Fluss aber auch eine Erhöhung der sekundärseitigen Spannung.

Die Speicherkapazität ist insbesondere im Zusammenwirken mit der seriell zur Schutzschaltung vorgesehenen Diode sinnvoll, die die Schutzschaltung von der Transformator-Wicklung entkoppelt. Somit dienen die Dioden dazu, die durch die Zenerdiode und die Speicherkapazität gebildete Kapazität vom Transformatorkreis zu entkoppeln und eine Vorspannung anzulegen, die die Schaltgeschwindigkeit erhöht.

Darüber hinaus wird die Kapazität zur Aufnahme der abfließenden Ladung erhöht, so dass die Kapazität der Zenerdiode die Schaltgeschwindigkeit nicht mehr maßgeblich beeinflusst, aber gleichzeitig eine Speicherung der aus dem Transformator rückfließenden Energie ermöglicht. Die in dieser Kapazität gespeicherte Energie kann dann über den Ableitwiderstand in das Ladungsreservoir der Pufferkapazität zurückgespeist werden.

Gemäß einer Ausführungsform kann der Transformator zwei primärseitige Wicklungen aufweisen, die wechselweise mit der Betriebsspannung verbunden und von dieser getrennt werden, so dass die Betriebsspannung stets nur an einer der primärseitigen Wicklungen anliegt.

Die entsprechenden geschalteten Anschlüsse der primärseitigen Wicklungen können insbesondere über eine jeweilige Diode mit der Schutzschaltung verbunden sein.

Gemäß einem weiteren Aspekt ist ein Ultraschallwandlersystem vorgesehen umfassend:
- einen piezoelektrischen Ultraschallwandler;
- die obige Ansteuerschaltung, wobei eine sekundärseitige Wicklung des Transformators mit dem Ultraschallwandler verbunden ist.

### Kurzbeschreibung der Zeichnungen

Ausführungsformen werden nachfolgend anhand der beigefügten Zeichnungen näher erläutert. Es zeigen:
- Fig. 1: eine schematische Darstellung eines Schaltbilds eines Ultraschallwandlersystems mit einer Ansteuerschaltung; und
- Fig. 2: ein Signal-Zeit-Diagramm von Spannungssignalen der Ansteuerschaltung.

### Beschreibung von Ausführungsformen

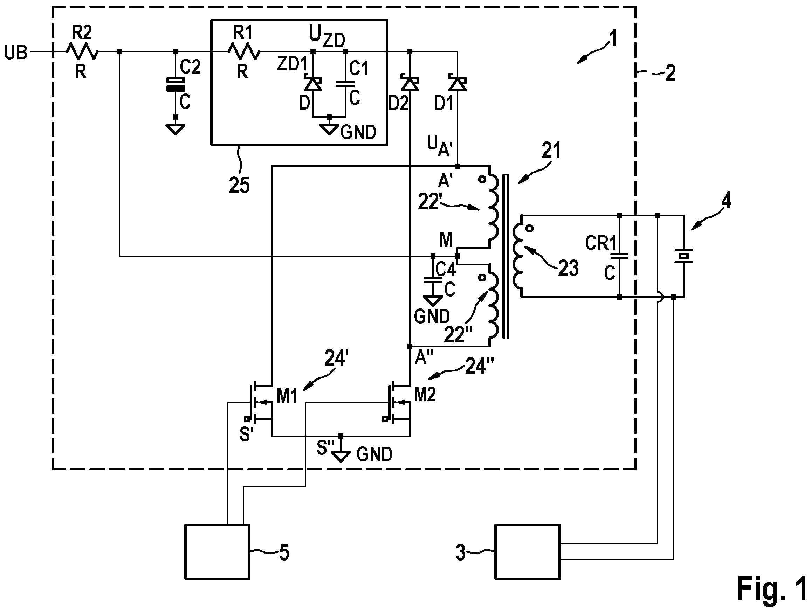

Figur 1 zeigt ein Ultraschallwandlersystem 1 mit einer Ansteuerschaltung 2 für einen Sendebetrieb des Ultraschallwandlersystems 1 und einer Empfangsschaltung 3 für einen Empfangsbetrieb des Ultraschallwandlersystems 1. Die Ansteuerschaltung 2 und die Empfangsschaltung 3 sind mit einem Ultraschallwandler 4 verbunden. Die Empfangsschaltung 3 ist nur schematisch gezeigt, und es wird hierin nicht weiter auf die konkrete Ausführung eingegangen.

Der Ultraschallwandler 4 weist einen Piezoaktor auf, der mit hohen Piezospannungen zwischen 100 und 200 V in einem Ultraschallfrequenzbereich ansteuerbar ist, um im Sendebetrieb ein Ultraschallsendesignal zu emittieren. Ein Ultraschallempfangssignal, das durch eine Reflexion des Ultraschallsendesignal an einem oder mehreren Umgebungsobjekten entsteht, führt in einem Empfangsbetrieb zu einer in der Empfangsschaltung 3 detektierbaren Kapazitätsänderung.

Die Ansteuerschaltung 2 und die Empfangsschaltung 3 werden über eine Steuereinheit 5 in der Regel in einem alternierenden Sende- und Empfangsbetrieb betrieben.

Die Ansteuerschaltung 2 umfasst einen Transformator 21, der sekundärseitig mit dem Ultraschallwandler 4 gekoppelt ist.

Der Transformator 21 weist zwei primärseitige Wicklungen 22 und eine sekundärseitige Wicklung 23 auf. Die primärseitigen Wicklungen 22 werden wechselweise bestromt mit jeweils einer gepulsten Betriebsspannung, die der gewünschten Ansteuerfrequenz des ausgesendeten Ultraschallsendesignals entspricht. Die primärseitigen Wicklungen 22 sind mit einem gemeinsamen Mittenanschluss M miteinander verbunden, der an ein erstes Versorgungspotential U_{B} (Betriebsspannung) angeschlossen ist. Insbesondere kann die Kopplung mit dem ersten Versorgungspotential U_{B} über einen Widerstand R2 und einen Kondensator C4 erfolgen, der eine Kapazität bezüglich eines zweiten Versorgungspotentials GND, insbesondere eines Massenpotentials, vorsieht.

Ein erster geschalteter Anschluss A` der ersten der primärseitigen Wicklungen 22' ist über einen ersten Halbleiterschalter 24' mit dem zweiten Versorgungspotential GND und ein zweiter geschalteter Anschluss A" einer zweiten der primärseitigen Wicklungen 22" über einen zweiten Halbleiterschalter 24" mit dem zweiten Versorgungspotential GND verbunden. Die Halbleiterschalter 24`, 24" werden wechselweise mithilfe der Steuereinheit 5 gemäß der Ansteuerfrequenz zum Öffnen oder Schließen mit einem jeweiligen Steuersignal S', S" angesteuert, so dass wechselweise die erste und die zweite primärseitige Wicklung 22`, 22" bestromt wird und die jeweils andere von der Betriebsspannung zwischen dem ersten Versorgungspotential U_{B} und dem zweiten Versorgungspotential GND getrennt wird.

Die sekundärseitige Wicklung 23 ist mit dem Ultraschallwandler 4 verbunden, der gegebenenfalls mit einem Pufferkondensator CR1 gepuffert sein kann. Aufgrund der hohen Schaltströme, die beim Anlegen der Betriebsspannung an die primärseitigen Wicklungen 22`, 22" auftreten, kann die erste Versorgungsspannung mit einer Pufferkapazität C2 gepuffert sein, die als Ladungsreservoir für hohe Anfangsströme nach dem Einschaltvorgang einer der primärseitigen Wicklungen 22', 22" dient.

Die geschalteten Anschlüsse A', A" der ersten und der zweiten primärseitigen Wicklungen 22', 22" sind über eine jeweilige Diode D1 und D2 mit einer Schutzschaltung 25 verbunden. Die Durchlassrichtungen der Dioden D1 und D2 entsprechen jeweils einer positiven Spannung zwischen den geschalteten Anschlüssen A`, A" und der Schutzschaltung 25.

Die Schutzschaltung 25 weist eine Zenerdiode ZD1 auf, die über die Dioden D1 und D2 mit dem geschalteten Anschluss A', A" und mit dem zweiten Versorgungspotential GND verbunden ist. Die Einsatzspannung (Durchbruchspannung) U_{ZD} der Zenerdiode ZD1 entspricht einer Spannung, die mindestens auf das Doppelte der Betriebsspannung, insbesondere etwas mehr als das Doppelte der Betriebsspannung, insbesondere zwischen 100% und 150 %, vorzugsweise zwischen 105% und 130%, des Doppelten der Betriebsspannung, eingestellt ist. Die Einsatzspannung der Zenerdiode definiert somit eine Begrenzungsspannung für die Spannung an dem geschalteten Anschluss A', A".

Durch den wechselseitigen Betrieb der primärseitigen Wicklungen 22', 22" entsteht am geschalteten Anschluss A`, A" der primärseitigen Wicklungen 22`, 22" nach dem Abschalten des betreffenden Halbleiterschalters 24`, 24" (Öffnen des betreffenden Halbleiterschalters) eine Abschaltspannung bzw. ein Abschaltpotential, die/das etwa dem doppelten Potential des ersten Versorgungspotentials U_{B} (bezogen auf das zweite Versorgungspotential GND) entspricht. Das Abschaltpotential liegt über die Dioden D1, D2 (abzüglich der Diodenspannung) an der Schutzschaltung 25 an. Die Begrenzung des Spannungsanstiegs für die primärseitigen Wicklungen 22', 22" des Transformators 21 oder den daran angeschalteten elektronischen Halbleiterschalter (Transistor, FET, ...) 24`, 24" bildet sich aus der Einsatzspannung U_{ZD} der Zener-Diode plus der Dioden-Vorwärts-Spannung der Dioden D1 bzw. D2. Wird die Zenerdiode ZD1 ohne die Dioden D1 und D2 verwendet, entspricht die Begrenzung des Spannungsanstiegs gleich der Einsatzspannung der Zener-Diode ZD.

Die Schutzschaltung 25 begrenzt das entsprechende Abschaltpotential auf das Potential der Einsatzspannung der Zenerdiode ZD1. Ohne die Zenerdiode ZD1 würde das Abschaltpotential weiter ansteigen, da die gespeicherte elektrische Energie einen Stromfluss durch die primärseitige Wicklung 22`, 22" bewirkt, der auf das erste Versorgungspotential VB zurückwirkt bzw. zu einem starken Ansteigen der Spannung an dem entsprechenden geschalteten Anschluss A', A" führen würde.

Die Zenerdiode ZD1 begrenzt den Spannungsanstieg auf die Einsatzspannung.

Vorzugsweise ist parallel zur Zenerdiode ZD1 eine Speicherkapazität geschaltet. Die Parallelschaltung erhöht die ladungsspeichernde Kapazität, die einen Teil der abfließenden Ladungsmenge aus der abgeschalteten primärseitigen Wicklung 22', 22" übernimmt und auf ein Spannungsniveau geladen wird, das der Einsatzspannung der Zenerdiode ZD1 entspricht.

Über einen Ableitwiderstand R1, mit dem die Schutzschaltung 25 mit dem ersten Versorgungspotential VB verbunden ist, kann nun die Ladung aus der Speicherkapazität C1 dem ersten Versorgungspotential VB zugeführt werden, insbesondere dort in die Pufferkapazität C2, um bei einem nachfolgenden Schaltvorgang entsprechend die Ladung für den hohen Anfangsstrom zur Verfügung zu stellen. Dadurch kann der Strombedarf der Ansteuerschaltung 2 reduziert werden, da ein Teil der beim Ausschalten der entsprechenden primärseitigen Wicklung abgeleiteten elektrischen Energie durch Speicherung in der Speicherkapazität C1 und der Pufferkapazität C2 für einen entsprechenden nachfolgenden Schaltvorgang mit dem benötigten hohen Anfangsstrom genutzt werden kann.

Die Dioden D1, D2 haben den Vorteil, dass die Kapazität der Zenerdiode ZD1 und der optionalen Speicherkapazität C2 von den geschalteten Anschlüssen A', A" entkoppelt sind, so dass deren Kapazitätseintrag in das Schalten des Transformators 21 verringert wird. Zum anderen ist die Zenerdiode der Schutzschaltung 25 über den Ableitwiderstand R1 vorgespannt, so dass deren Schaltträgheit verringert ist. Die Dioden entkoppeln diesen Teil der Schutzschaltung von den primärseitigen Wicklungen und ermöglichen dieses Vorspannen.

Die Schutzschaltung 25 ermöglicht zudem, die elektrische Energie aus den primärseitigen Wicklungen 22`, 22" schnell abzuleiten, so dass weniger elektrische Energie im Transformator 21 verbleibt, und insbesondere nach Beenden des Sendebetriebs das Ausschwingen der Transformator-Ultraschallwandler-Kombination, die einen Schwingkreis mit der Induktivität der sekundärseitigen Wicklung 23 und der Kapazität des Piezoaktors des Ultraschallwandlers 4 bildet, verkürzt werden kann. Dies verbessert die Performance für Objektdetektionen im Nahbereich, da ein Ultraschallempfangssignal nicht von einem noch andauernden Ausschwingen des gebildeten Schwingkreises überlagert wird.

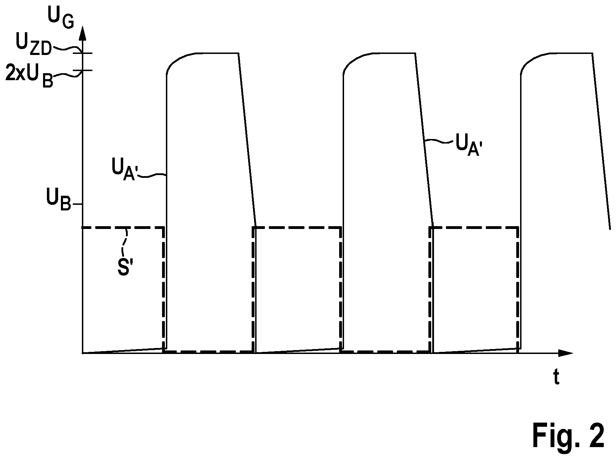

Figur 2 zeigt ein Signal-Zeit-Diagramm zur Veranschaulichung des Betriebs der Ansteuerschaltung 2 für einen der geschalteten Anschlüsse A'. Man erkennt, dass nach dem Abschalten des betreffenden Halbleiterschalters 24' (gesteuert durch einen niedrigen Pegel des Steuersignals S') die Spannung an dem geschalteten Anschluss A` sofort auf das Doppelte der Betriebsspannung 2*U_{B} ansteigt und anschließend aufgrund des Energieabflusses in Schutzschaltung 25 weiter bis zu der Begrenzungsspannung U_{G} bei abnehmenden Stromfluss ansteigt und dort gehalten wird, bis die im Transformator gespeicherte Energie abgebaut ist. Die Spannung an dem geschalteten Anschluss A` bricht in Folge bis auf U_{B} zusammen. Die gesamte Schaltung sollte so ausgelegt sein, dass der Spannungsabfall an dem geschalteten Anschluss A` bis zum Einsetzten des nächsten Pulses des Steuersignals S' erfolgt ist.

### Bezugszeichenliste

- 1: Ultraschallwandlersystem
- 2: Ansteuerschaltung
- 3: Empfangsschaltung
- 4: Ultraschallwandler
- 5: Steuereinheit
- 21: Transformator
- 22, 22', 22": primärseitige Wicklungen
- 23: sekundärseitige Wicklung
- 24`, 24": Halbleiterschalter
- 25: Schutzschaltung
- U_{B}: Betriebsspannung, erstes Versorgungspotential
- R1: Ableitwiderstand
- R2: Widerstand
- C1: Speicherkapazität
- C2: Pufferkapazität
- C4: Kondensator
- GND: zweites Versorgungspotential
- A', A": geschaltete Anschlüsse
- D1, D2: Dioden
- ZD1: Zenerdiode

## Patentansprüche

1. Ansteuerschaltung (2) für einen piezoelektrischen Ultraschallwandler (4) in einem Ultraschallwandlersystem (1), umfassend:
- einen Transformator (21) mit mindestens einer primärseitigen Wicklung (22, 22', 22");
- eine Schalteinheit mit einem Halbleiterschalter (24`, 24"), die mit der mindestens einen primärseitigen Wicklung (22, 22', 22") über einen geschalteten Anschluss (A', A") verbunden ist,
- eine Steuereinheit (5), die ausgebildet ist, um eine Betriebsspannung (U_{B}) alternierend an die mindestens eine primärseitige Wicklung (22, 22', 22") anzulegen oder davon zu trennen,
- eine Schutzschaltung (25), die mit dem geschalteten Anschluss (A', A") elektrisch gekoppelt ist und eine Zenerdiode (ZD1) aufweist, die eine Abschaltspannung am geschalteten Anschluss (A', A") betragsmäßig auf eine Begrenzungsspannung (U_{G}) begrenzt, die mindestens der doppelten Betriebsspannung entspricht.

2. Ansteuerschaltung nach Anspruch 1, wobei die Begrenzungsspannung (U_{G}) aus einem Bereich zwischen 100 und 150 % des Betrags der doppelten Betriebsspannung (U_{B}), insbesondere zwischen 105 und 130 % des Betrags der doppelten Betriebsspannung gewählt, ist.

3. Ansteuerschaltung nach Anspruch 1 oder 2, wobei die Begrenzungsspannung (U_{G}) durch Wahl einer Einsatzspannung oder Durchbruchsspannung (U_{ZD}) der Zenerdiode (ZD1) bestimmt ist.

4. Ansteuerschaltung (2) nach Anspruch 3, wobei die Schutzschaltung (25) mit dem mindestens einen geschalteten Anschluss über eine Diode (D1, D2) , insbesondere direkt über die Diode (D1, D2) , gekoppelt ist, die bei Auftreten einer Spannungsdifferenz zwischen dem mindestens einen geschalteten Anschluss (A', A") und der Zenerdiode (ZD1) einen Ladungsfluss von bzw. zu dem mindestens einen geschalteten Anschluss (A', A") zur Begrenzung einer Spannungsänderung an dem mindestens einen geschalteten Anschluss (A', A") bewirkt.

5. Ansteuerschaltung nach einem der Ansprüche 1 bis 4, wobei die Schutzschaltung (25) elektrisch nicht kapazitiv mit dem mindestens einen geschalteten Anschluss (A', A") gekoppelt ist.

6. Ansteuerschaltung nach einem der Ansprüche 1 bis 5, wobei die Schutzschaltung (25) elektrisch parallel zur Zenerdiode (ZD1) eine Speicherkapazität (C1) aufweist.

7. Ansteuerschaltung nach einem der Ansprüche 1 bis 6, wobei die Betriebsspannung durch eine Pufferkapazität (C2) gepuffert ist, wobei die Schutzschaltung (25) über einen Ableitwiderstand (R1) mit der Pufferkapazität (C2) gekoppelt ist.

8. Ansteuerschaltung nach einem der Ansprüche 1 bis 7, wobei der Transformator (21) zwei primärseitige Wicklungen (22, 22', 22") aufweist, die wechselweise mit der Betriebsspannung (U_{B}) verbunden und von dieser getrennt werden, so dass die Betriebsspannung (U_{B}) stets nur an einer der primärseitigen Wicklungen (22, 22', 22") anliegt.

9. Ansteuerschaltung nach Anspruch 8, wobei die entsprechenden geschalteten Anschlüsse (A', A") der primärseitigen Wicklungen (22, 22', 22") insbesondere über eine jeweilige Diode (D1, D2) mit der Schutzschaltung (25) verbunden sind.

10. Ultraschallwandlersystem (1) umfassend:
- einen piezoelektrischen Ultraschallwandler (4);
- eine Ansteuerschaltung (2) nach einem der Ansprüche 1 bis 9, wobei eine sekundärseitige Wicklung (23) des Transformators (21) mit dem Ultraschallwandler (4) verbunden ist.

## Claims

1. Driving circuit (2) for a piezoelectric ultrasonic transducer (4) in an ultrasonic transducer system (1), comprising:
- a transformer (21) having at least one primary-side winding (22, 22', 22");
- a switching unit having a semiconductor switch (24', 24") connected to the at least one primary-side winding (22, 22', 22") via a switched connection (A', A"); and
- a control unit (5) which is configured to alternately apply an operating voltage (U_{B}) to the at least one primary-side winding (22, 22', 22") or to disconnect it therefrom,
- a protection circuit (25) which is electrically coupled to the switched connection (A', A") and which has a Zener diode (ZD1) which limits a switch-off voltage at the switched connection (A', A") in terms of magnitude to a limiting voltage (U_{G}) which corresponds to at least twice the operating voltage.

2. Driving circuit according to claim 1, wherein the limiting voltage (U_{G}) is selected from a range between 100 % and 150 % of the magnitude of twice the operating voltage (U_{B}), in particular between 105 % and 130 % of the magnitude of twice the operating voltage.

3. Driving circuit according to claim 1 or 2, wherein the limiting voltage (U_{G}) is determined by selecting a starting voltage or breakdown voltage (U_{ZD}) of the Zener diode (ZD1).

4. Driving circuit (2) according to claim 3, wherein the protection circuit (25) is coupled to the at least one switched connection via a diode (D1, D2), in particular directly by means of the diode (D1, D2), which, when a voltage difference occurs between the at least one switched connection (A', A") and the Zener diode (ZD1), causes a charge flow from or to the at least one switched connection (A', A"). in order to limit a change in voltage at the at least one switched connection (A', A").

5. Driving circuit according to one of claims 1 to 4, wherein the protection circuit (25) is electrically coupled to the at least one switched connection (A', A") in a non-capacitive fashion.

6. Driving circuit according to one of claims 1 to 5, wherein the protection circuit (25) has a storage capacitance (C1) electrically in parallel to the Zener diode (ZD1).

7. Driving circuit according to one of claims 1 to 6, wherein the operating voltage is buffered by a buffer capacitance (C2), wherein the protection circuit (25) is coupled to the buffer capacitance (C2) via a leakage resistor (R1).

8. Driving circuit according to one of claims 1 to 7, wherein the transformer (21) has two primary-side windings (22, 22', 22") which are being alternately connected to and disconnected from the operating voltage (U_{B}), so that the operating voltage (U_{B}) is constantly applied to one of the primary-side windings (22, 22', 22").

9. Driving circuit according to claim 8, wherein the corresponding switched connections (A', A") of the primary-side windings (22, 22', 22") are connected to the protection circuit (25), in particular via a respective diode (D1, D2).

10. Ultrasonic transducer system (1), comprising:
- a piezoelectric ultrasonic transducer (4);
- a driving circuit (2) according to one of claims 1 to 9, wherein a secondary-side winding (23) of the transformer (21) is connected to the ultrasonic transducer (4).

## Revendications

1. Circuit de commande (2) pour un transducteur ultrasonore piézoélectrique (4) dans un système de transducteur ultrasonore (1), comprenant :
- un transformateur (21) avec au moins un enroulement (22, 22', 22") du côté primaire ;
- une unité de commutation avec un commutateur à semi-conducteur (24', 24"), qui est reliée à l'au moins un enroulement côté primaire (22, 22', 22") par une connexion commutée (A', A"),
- une unité de commande (5) qui est conçue pour appliquer une tension de fonctionnement (U_{B}) alternativement à l'au moins un enroulement côté primaire (22, 22', 22") ou pour l'en séparer,
- un circuit de protection (25) qui est couplé électriquement à la borne commutée (A', A") et qui comporte une diode Zener (ZD1) qui limite en valeur absolue une tension de coupure à la borne commutée (A', A") à une tension de limitation (U_{G}) qui correspond au moins au double de la tension de service.

2. Circuit de commande selon la revendication 1, dans lequel la tension de limitation (U_{G}) est choisie dans une plage comprise entre 100 et 150 % de la valeur de la tension de service double (U_{B}), en particulier entre 105 et 130 % de la valeur de la tension de service double.

3. Circuit de commande selon la revendication 1 ou 2, dans lequel la tension de limitation (U_{G}) est déterminée par la sélection d'une tension d'utilisation ou tension de claquage (U_{ZD}) de la diode Zener (ZD1).

4. Circuit de commande (2) selon la revendication 3, dans lequel le circuit de protection (25) est couplé à l'au moins une borne commutée par l'intermédiaire d'une diode (D1, D2) , en particulier directement par l'intermédiaire de la diode (D1, D2) , qui, en cas d'apparition d'une différence de tension entre l'au moins une borne commutée (A', A") et la diode Zener (ZD1), déclenche un flux de charge depuis ou vers la diode Zener (ZD1). vers la au moins une borne commutée (A', A") pour limiter une variation de tension sur la au moins une borne commutée (A', A").

5. Circuit de commande selon l'une des revendications 1 à 4, dans lequel le circuit de protection (25) est couplé électriquement de manière non capacitive à ladite au moins une borne commutée (A', A").

6. Circuit de commande selon l'une des revendications 1 à 5, dans lequel le circuit de protection (25) comporte une capacité de stockage (C1) électriquement en parallèle de la diode Zener (ZD1).

7. Circuit de commande selon l'une des revendications 1 à 6, dans lequel la tension de fonctionnement est tamponnée par une capacité tampon (C2), le circuit de protection (25) étant couplé à la capacité tampon (C2) par une résistance de fuite (R1).

8. Circuit de commande selon l'une des revendications 1 à 7, dans lequel le transformateur (21) comporte deux enroulements (22, 22', 22") côté primaire qui sont alternativement reliés à la tension de service (U_{B}) et séparés de celle-ci, de sorte que la tension de service (U_{B}) est toujours appliquée à un seul des enroulements (22, 22', 22") côté primaire.

9. Circuit de commande selon la revendication 8, dans lequel les bornes commutées correspondantes (A', A") des enroulements (22, 22', 22") côté primaire sont reliées au circuit de protection (25) notamment par l'intermédiaire d'une diode respective (D1, D2).

10. Système de transducteur ultrasonore (1) comprenant :
- un transducteur ultrasonore piézoélectrique (4) ;
- un circuit de commande (2) selon l'une des revendications 1 à 9, dans lequel un enroulement (23) côté secondaire du transformateur (21) est relié au transducteur ultrasonore (4).
